Europäisches Patentamt

European Patent Office

Office européen des brevets

(19)

(11) **EP 1 117 096 B1**

(12) **EUROPEAN PATENT SPECIFICATION**

(45) Date of publication and mention
of the grant of the patent:
**03.03.2004 Bulletin 2004/10**

(51) Int Cl.$^7$: **G11B 7/135**

(21) Application number: **00307764.1**

(22) Date of filing: **08.09.2000**

(54) **Optical pickup**

Optische Abtastvorrichtung

Tête de lecture optique

(84) Designated Contracting States:
**DE FR GB NL**

(30) Priority: **14.01.2000 KR 2000001782**

(43) Date of publication of application:
**18.07.2001 Bulletin 2001/29**

(73) Proprietor: **SAMSUNG ELECTRONICS CO., LTD.**
**Suwon-city, Kyungki-do 441-373 (KR)**

(72) Inventors:
 • **Kim, Tae-kyung**
 **Paldal-gu, Suwon-city, Kyungki-do (KR)**
 • **Chung, Chong-sam**
 **Seongnam-city, Kyungki-do (KR)**
 • **Ahn, Young-man**
 **Paldal-gu, Suwon-city, Kyungki-do (KR)**
 • **Seo, Hea-jung**
 **Seongnam-city, Kyungki-do (KR)**

(74) Representative: **Chugg, David John et al**
**Appleyard Lees,**
**15 Clare Road**
**Halifax, West Yorkshire HX1 2HY (GB)**

(56) References cited:
**EP-A- 0 831 466      EP-A- 0 865 037**
**EP-A- 0 996 120      DE-A- 19 927 714**

 • **PATENT ABSTRACTS OF JAPAN vol. 2000, no.
10, 17 November 2000 (2000-11-17) -& JP 2000
195087 A (MATSUSHITA ELECTRIC IND CO
LTD), 14 July 2000 (2000-07-14)**
 • **YAMAMOTO ET AL: "0.8-NA two element
objective lens for the optical disk" JAPANESE
JOURNAL OF APPLIED PHYSICS,
PUBLICATION OFFICE JAPANESE JOURNAL
OF APPLIED PHYSICS. TOKYO, JP, vol. 36, no.
1B, 1997, pages 456-459, XP002084439 ISSN:
0021-4922**
 • **PATENT ABSTRACTS OF JAPAN vol. 2000, no.
06, 22 September 2000 (2000-09-22) -& JP 2000
082232 A (RICOH CO LTD), 21 March 2000
(2000-03-21)**

**Description**

The present invention relates to an optical pickup for high-density information writing and reading systems, and more particularly, to an optical pickup capable of reducing chromatic aberration which occurs when a blue light source is employed; and to an optical pickup system incorporating such an optical pickup.

In optical writing and reading systems, the recording density is determined by the size of the focused spot. In general, the size of the focused spot (S) is proportional to the wavelength ($\lambda$), and inversely proportional to the numerical aperture (NA), which is expressed by formula (1) :

$$S \propto \lambda / NA \qquad (1)$$

For a higher recording density than that for compact disks (CDs) or digital versatile disks (DVDs), the size of the spot being focused on an optical disk must be further reduced. To reduce the spot size, as can be inferred from formula (1), the wavelength ($\lambda$) of a laser beam must be reduced and the NA of an objective lens must be increased. Thus, for such high density information recording, a laser beam having a short wavelength, for example, a blue laser, must be employed as a light source and the NA of the objective lens must be maintained to be 0.6 or more.

On the other hand, coma aberration $W_{31}$, which occurs due to tilting of the optical disk, is associated with the tilt angle ($\theta$) of the disk, the refractive index (n) of the disk substrate, the thickness (d) of the disk substrate, and the NA of the objective lens, as expressed by formula (2):

$$W_{31} = -\frac{d}{2} \cdot \frac{n^2(n^2 - 1)\sin\theta\cos\theta}{(n^2 - \sin^2\theta)^{5/2}} NA^3 \qquad (2)$$

To ensure allowance with respect to the tilt of disk for high density recording, there is a tendency of reducing the thickness (d) of the disk substrate. For example, CDs have a thickness of 1.2 mm and DVDs have a thickness of 0.6 mm. Also, there is a high possibility that the thickness of high-definition DVDs (HD-DVDs), which are recently being developed, is determined to be 0.6 mm or less. In adopting such thin optical disks for high density recording, the first consideration is the compatibility with existing disks including CDs and DVDs. However, for DVD-recordable (DVD-R) and multi-layered DVDs, it is necessary to adopt a red light source because of the low reflectivity of these disks with respect to short wavelength light. Therefore, a red light source is exclusively employed for these disks. With regard to the objective lens, by applying a technique capable of correcting both chromatic aberration caused by the different wavelengths of light sources, and spherical aberration caused by the difference in thickness between disks, it is possible to commonly use one objective lens for both existing disks and HD-DVDs.

For the case of an optical pickup for 0.6mm-thick DVDs, which adopts a red light source and an objective lens having a NA of 0.6, in order to be compatible with 1.2mm-thick CDs, an additional light source having a wavelength of 650 nm and an objective lens are employed in the optical pickup with various techniques. These techniques include an annular shielding technique for blocking light passing through the intermediate area between far axis and near axis areas, a method for controlling the NA of the objective lens by using liquid crystal (LC) shutters, and a method for splitting light using a hologram optical member to form individual focuses onto two disks having different thicknesses. However, for compact disk recordables (CD-Rs), reflectivity with respect to red light sharply drops, and thus a light source having a wavelength of 780 nm is necessary. For this reason,.use of a DVD indefinite/CD definite optical system providing compatibility between light beams of 780 nm and 650 nm, or use of an annular objective lens which has an annular focus region between near axis and far axis regions has been suggested. In particular, for a CD definite optical system, the NA of the objective lens is limited and divergent rays are incident on the objective lens, thereby correcting aberration caused by thickness variations of disks and the objective lens.

As previously described, an optical pickup adopting a short wavelength light source is required for higher density information writing and reading than DVD systems are capable of. As an example, for an optical pickup for HD-DVDs, a laser having a wavelength shorter than 650 nm which is used for DVDs, is required as a light source. In addition, refractivity of optical material for an optical disk varies sharply at wavelengths shorter than 650 nm, thereby causing excessive aberration. Thus, there is a need for a optical system capable of effectively reducing the chromatic aberration, and being compatible with existing DVDs.

For a DVD-R, the reflectivity with respect to light sources other than a red light source decreases. Thus, for the compatibility with DVD-Rs, a light source having a wavelength of 650 nm must be adopted. However, the problem of aberration can not be eliminated from a 400 nm-objective lens just by controlling the degree of divergent of incident light, which is emitted from the 650 nm-light source and is incident on the objective lens. Thus, the critical concern in searching HD-DVDs is the effective chromatic aberration correction technique.

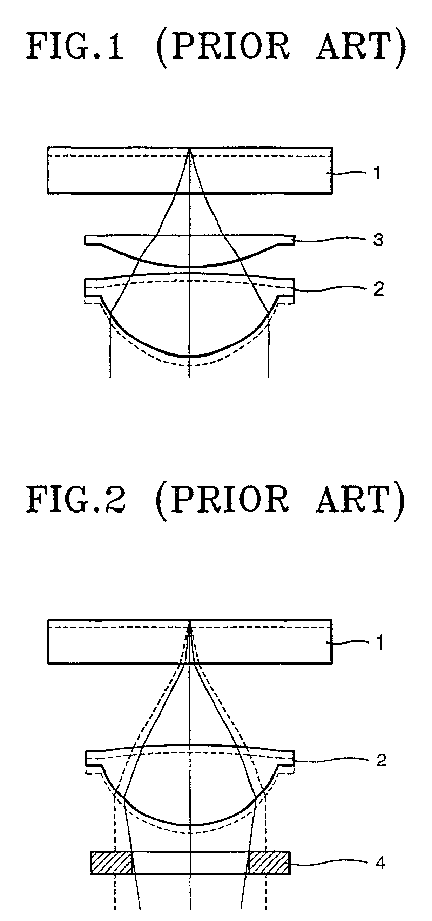

According to a conventional method for correcting aberration, as shown in Figure 1, an aberration correcting lens 3 is interposed between an optical disk 1 and an objective lens 3. Alternatively, as shown in Figure 2, a wavelength selecting member 4 for defining the NA of the objective lens 2 depending on the wavelength of light is located between the objective lens 2 and the light source (not shown). For the optical pickup shown in Figure 1, spherical aberration is corrected by adjusting the distance between the two lenses according to the thickness variation of the optical disk 1. For the optical pickup shown in Figure 2, the NA of the objective lens 2 with respect to light having a longer wavelength is limited by the wavelength selecting member 4, and its optical elements are arranged such that the light from light sources is divergently incident on the objective lens 2, thereby correcting spherical aberration due to the thickness variation of optical disks.

However, the conventional optical pickup shown in Figure 1 needs precise controlling of the distance between the objective lens 2 and the aberration correcting lens 3, therefore an additional actuator for accurately controlling the distance between the two lenses, and between lense and the disk is required. Thus, the manufacture of the optical pickup is complicated and the cost is expensive. In addition, for the conventional optical pickup shown in Figure 2, because divergent light is used, axial distortion of the objective lens with respect to disks causes distortion of a tracking error.

EP-A-0 865037 discloses an objective lens and an optical head including the objective lens for reading information contained on substrates having different thicknesses using laser beams having different wavelengths. The objective lens includes an annular phase shifter for decreasing an aberration of a focused spot of each of the laser beams. The annular phase shifter can be optimally combined with the objective lens having inner and outer regions each having a different substrate thickness.

EP-A-0 831466 reflecting the preamble of claim 1 discloses an optical head including a fixed optical system having a first light source for outputting a first collimated light having a first wavelength, a first detection system for receiving a reflection of the first collimated from a first optical disk having a substrate thickness, a second light source outputting a second collimated light parallel to the first collimated light and having a second wavelength different than that of the first wavelength, and a second detection system for receiving a reflection of the second collimated light from a second optical disk having a second substrate thickness different than that of the first substrate thickness. A movable optical system includes an objective lens for focusing the first light on the first optical disk, and focusing the second light on the second optical disk and an optical system for converting a wave front of the second light and transmitting the second light to the objective lens. A driving system moves the movable optical system in a direction relative to the first collimated light.

EP-A-0 996120 is relevant to pursuant to Article 54(3) and (4) EPC only. It discloses an optical pickup apparatus compatible with at least two types of optical recording media using light beams having respective different wavelengths for recording and reading information, the optical pickup apparatus including two laser light sources to emit light beams having different wavelengths, respectively, a holographic lens including a holographic ring for transmittal of the light beams emitted from the laser light sources in an inner region of. the holographic ring, and diffracting a specific light beam among the light beams emitted from the laser light sources in an outer region relative to the inner region, an objective lens to focus the light beams passed through the holographic ring lens on the respective information recording surfaces of the two types of the optical. recording media, optical elements to alter optical parts of the light beams reflected from the information recording surfaces of the optical recording media; and two photo detectors to individually detect optical information from the light beams incident from the optical elements.

DE-A-19927714 discloses a high density optical disk having a substrate thickness of about 0.2-0.4mm using a light beam with a wavelength of 395nm to 425nm.

Yamamoto et al: "0.8-NA two element objective lens for the optical disk", Japanese Journal of Applied Physics, Publication Office, Japanese Journal of Applied Physics, Tokyo, JP, vol. 36, no. 1B, 1997, pages 456-459, discloses an objective lens having an aspheric plan to read out optical media having a substrate thickness less than 0.6mm.

With a view to solve or reduce the above problems, it is an aim of embodiments of the present invention to provide an optical pickup that uses laser beams each having different wavelengths, and is compatible with different types of optical recording media.

It is another aim of embodiments of the present invention to provide an optical pickup that is capable of being assembled easily with a simple structure, and is compatible with different types of optical recording media.

It is still another aim of embodiments of the present invention to provide an optical pickup that is capable of being manufactured at low cost, and is compatible with different types of optical recording media.

According to a first aspect of the present invention, there is provided an optical pickup comprising: first and second light sources for generating laser beams having different wavelengths, corresponding to first and second media having different thicknesses, respectively; an objective lens having diverging and condensing portions, for condensing the laser beams from the first and second light sources onto the first and second media, respectively; at least one photodetector for receiving the laser beams which are emitted from the first and second light sources and reflected, respectively, by the first and second media; and a collimating lens arranged on the optical path between the objective lens, and the first and second light sources; characterized in that: assuming that the front focal lengths of the diverging and condensing portions of the objective lens are f1 and f2, respectively, and the Abbe's numbers on the d-line of the optical materials for the diverging and condensing portions of the objective lens are v1 and v2, respectively, the objective lens satisfies the relationship $0 < 1/(f1 \cdot v1) + 1/(f2 \cdot v2) < 0.005$.

Preferably, assuming that the focal length of the entire objective lens is f and the focal length of the diverging portion is fn, the objective lens satisfies the relationship $-0.8 < f/fn < 0$.

Preferably, one surface of the objective lens is an aspheric plane. Preferably, the photodetector receives the laser beams originating from both the first and second light sources.

Preferably, the first light source generates a blue laser beam, and more preferably, having a wavelength of 405 nm, and the second light source generates a red laser beam, and more preferably, having a wavelength of 650 nm.

According to the present invention in a second aspect, there is provided an optical pickup system comprising an optical pickup according to the first aspect of the invention, in which the substrate of the first medium has a thickness less than 0.6 mm and the substrate of the second medium has a thickness of 0.6 mm.

For a better understanding of the invention, and to show how embodiments of the same may be carried into effect, reference will now be made, by way of example, to the accompanying diagrammatic drawings in which:

Figure 1 illustrates the objective lens of a conventional optical pickup;

Figure 2 illustrates the objective lens of another conventional optical pickup;

Figure 3 shows the optical arrangement of a first embodiment of an optical pickup according to the present invention;

Figure 4 shows the optical arrangement of a second embodiment of an optical pickup according to the present invention;

Figure 5 is a graph comparatively showing the variation of optimal thickness of a disk substrate for the inventive optical pickup and a conventional optical pickup, with respect to the variation of wavelength;

Figure 6 is a graph comparatively showing the variation of aberration for the inventive optical pickup and a conventional optical pickup, with respect to the variation of wavelength;

Figure 7A illustrates the optical path of light having a wavelength of 405 nm in the optical pickup according to embodiments of the present invention;

Figure 7B illustrates aberration with respect to light having a wavelength of 405 nm in the optical pickup according to embodiments of the present invention;

Figure 7C illustrates the focus error signal for light having a wavelength of 405 nm in the optical pickup according to embodiments of the present invention;

Figure 8A illustrates the optical path of light having a wavelength of 650 nm in the optical pickup according to embodiments of the present invention;

Figure 8B illustrates aberration with respect to light having a wavelength of 650 nm in the optical pickup according to embodiments of the present invention; and

Figure 8C illustrates the focus error signal for light having a wavelength of 650 nm in the optical pickup according to embodiments of the present invention.

<Embodiment 1>

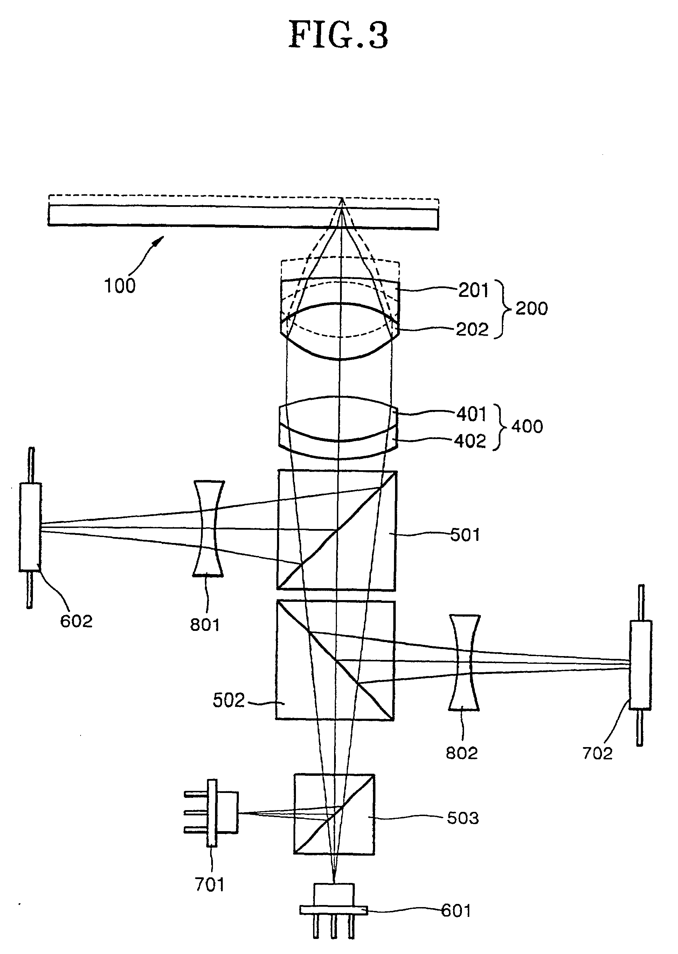

A first preferred embodiment of an optical pickup according to the present invention is shown in Figure 3. Referring to Figure 3, a first light source 601 is positioned at the end of the optical axis of an objective lens 200 that faces a medium (optical disk) 100. Also, a collimating lens 400, and first, second and third beam splitters 501, 502 and 503 are sequentially arranged on the optical path between the objective lens 200 and the first light source 601. The collimating lens 400 includes a positive lens 401 with condensing power and a negative lens 402 with diverging power.

The collimating lens 400 collimates the laser beams from the first and second light sources 601 and 701, and the collimated laser beams are incident on the medium 100 through the objective lens 200.

The third beam splitter 503 transmits the laser beam from the first light source 601 and reflects the laser beam from the second light source 701 toward the medium 100. As shown in Figure 3, the second light source 701 is arranged on the optical path of the light reflected from the third beam splitter 503.

The second beam splitter 502 transmits the laser beams from the first and second light sources 601 and 701, and reflects the light reflected from the medium 100 which originated from the second light source 701. The light reflected by the medium 100 and in turn by the second beam splitter 502 is condensed by a second condensing lens 802 onto a second photodetector 702.

The first beam splitter 501 transmits all of the laser beams from the first and second light sources 601 and 701. Also, the first beam splitter 501 reflects the light reflected by the medium 100, which is originated from the first light source 601, and transmits the light reflected by the medium 100 which originated from the second light source 701. The light reflected by the medium 100 and in turn by the first beam splitter 501 is condensed by a first condensing lens 801 onto a first photodetector 602.

The objective lens 200, which is a feature of the present invention, is a doublet lens including a positive portion 202 with a condensing power, and a negative portion 201 with a diverging power. Assuming that the focal length of the objective lens 200 is f and the focal length of the negative portion 201 is fn, the objective lens 200 satisfies the relationship $-0.8 < f/fn < 0$.

Also, assuming that the front focal lengths of the negative and positive portions 201 and 202 of the objective lens 200 are f1 and f2, respectively, and the Abbe's numbers on the d-line of the optical materials for the negative and positive portions 201 and 202 are v1 and v2, respectively, the objective lens 200 satisfies the relationship $0 < 1/(f1 \cdot v1) + 1/(f2 \cdot v2) < 0.005$. In addition, one surface of the objective lens 200 is an aspheric plane.

<Embodiment 2>

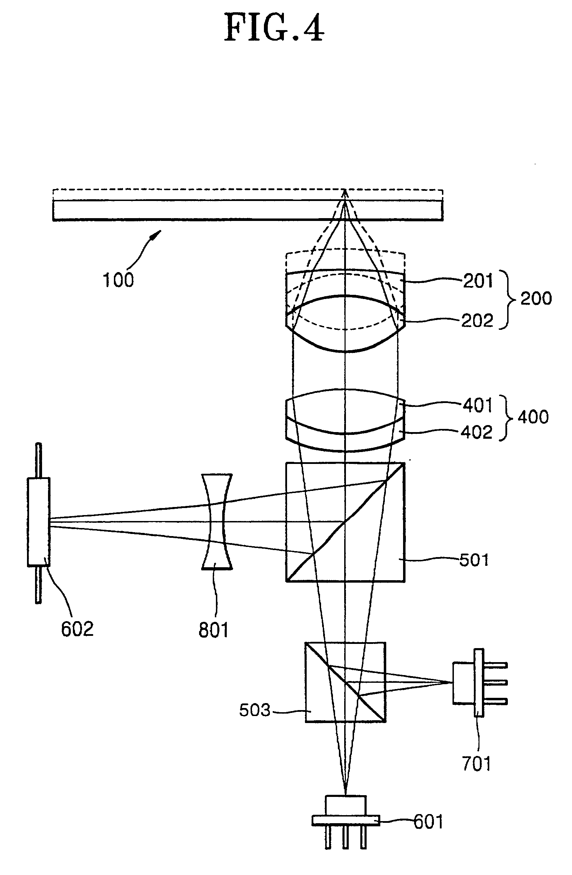

A second preferred embodiment of the optical pickup according to the present invention is shown in Figure 4. Referring to Figure 4, a first light source 601 is positioned at the end of the optical axis of an objective lens 200 that faces a medium 100. Also, first and third beam splitters 501 and 503 are arranged between the objective lens 200 and the first light source 601, being apart a predetermined distance from each other. A collimating lens 400 including a positive lens 401 with a condensing power and a negative lens 402 with a diverging power is arranged between the objective lens 200 and the first beam splitter 501.

The collimating lens 400 collimates laser beams from the first and second light sources 601 and 701, and the collimated laser beams are incident on the medium 100 through the objective lens 200.

The third beam splitter 503 transmits the laser beam from the first light source 601 and reflects the laser beam from the second light source 701 toward the medium 100. As shown in Figure 4, the second light source 701 is arranged on the optical path of the light reflected by the third beam splitter 503.

The first beam splitter 501 transmits the laser beams from the first and second light sources 601 and 701, and reflects the light reflected by the medium 100. The light reflected by the medium 100 and in turn by the first beam splitter 501 is condensed by a condensing lens 801 onto a photodetector 602a.

As in the first embodiment, the objective lens 200 shown in Figure 4, which forms a feature of the present invention, is a doublet lens including a positive portion 202 with a condensing power, and a negative portion 201 with a diverging power. Assuming that the focal length of the objective lens 200 is f and the focal length of the negative portion 201 is fn, the objective lens 200 satisfies the relationship $-0.8 < f/fn < 0$. In addition, one surface of the objective lens 200 is an aspheric plane.

Also, assuming that the front focal lengths of the negative and positive portions 201 and 202 of the objective lens 200 are f1 and f2, respectively, and the Abbe's numbers on the d-line of the optical materials for the negative and positive portions 201 and 202 are v1 and v2, respectively, the objective lens 200 satisfies the relationship $0 < 1/(f1 \cdot v1) + 1/(f2 \cdot v2) < 0.005$.

In the previous first and second embodiments, a wavelength selecting filter may be further arranged between the objective lens 200 and the collimating lens 200. The wavelength selecting filter is employed if there is a need for separately controlling the NA of the objective lens with respect to the laser beams generated from the first and second light sources 601 and 701. For example, for the case of using the first light source 601, which emits a blue laser beam of 405 nm and needs the objective lens to have an NA of 0.7, and the second light source 701, which emits a red laser beam of 650 nm and needs the objective lens to have an NA of 0.6, the wavelength selecting filter 300 is adopted to allow a reduction of the NA of the objective lens to 0.6 for the laser beam of 650 nm, while transmitting all of the laser beam of 405 nm.

Table 1 shows the design data for an optical pickup, which uses a laser beam of 405 nm and includes a disk having a 0.4mm-thick substrate.

## Table 1

| Surface | Curvature Radius | Thickness | Name of Glass |
|---|---|---|---|
| Object Surface | Infinity | 0.000000 | |
| s1 | Infinity | 0.250000 | BK7 |
| s2 | Infinity | 16.26320 | |
| s3 | Infinity | 6.000000 | BK7 |
| s4 | Infinity | 3.000000 | |
| s5 | 99.276000 | 1.000000 | FD4 |
| s6 | 13.400000 | 2.000000 | BAF10 |
| s7 | -17.230000 | 5.000000 | |
| s8 | 2.249482 | 2.000000 | BACD5 |
| | K: -1.099197, A: 0.540411E-0.2 B: -0.113820E-03 C: 0.266830E-04 D:-0.287691E-04 E: 0.502346E-05 F: -0.541172E-06 | | |
| s9 | -13.997487 | 0.800000 | FEL1 |
| s10 | Infinity | 1.508124z1 | |
| s11 | Infinity | 0.400000z2 | 'CG' |
| s12 | Infinity | 0.000000 | |
| Image Surface | Infinity | 0.000000 | |
| Equation of Aspheric Surface (See Formula (2)) | | | |
| Refractive Index/Abbe's Number on d-line, v | BACD : 1.605256/ 61.3 FEL1 : 1.568949/ 45.8 FD4 : 1.805793/ 27.5 BAF10 : 1.694714/ 47.2 BK7 : 1.530196/ 64.2 'CG' : 1.621462/ 31.0 | | |
| Diameter of Entrance Pupil (mm) | 3.96 | | |
| Wavelength (nm) | 405 | | |
| Focal Distance of Collimating Lens at Negative /Positive Portions, fc1/fc2 (mm) | -19.325/ 11.149 24.994 | | |

| Focal Distance of Combined Collimating Lens, fc (mm) | |
|---|---|
| $\Sigma$ 1 / (fi·vi) | 0.0002 |
| fc / fc1 | -1.293 |
| Focal Distance of Objective Lens at Negative /Positive Portions, fo1/fo2 (mm) | 2.491/ -7.009 |
| Focal Distance of Combined Objective Lens, fo (mm) | 3.352 |
| $\Sigma$ 1 / (fi·vi) | 0.0034 |
| fo / fo1 | -0.478 |
| Thickness at 650 nm | z1 : 1.451248 |
| | z2 : 0.6000000 |

$$Z = \frac{ch^2}{1 + \sqrt{1 - (1 + k)c^2 h^2}} + Ah^4 + Bh^6 + Ch^8 + Dh^{10} + Eh^{12} + Fh^{14} \tag{2}$$

where z is depth from the vertex of the surface, h is distance from the optical axis, c is curvature, K is a conic coefficient, and A, B, C and D are aspheric coefficients.

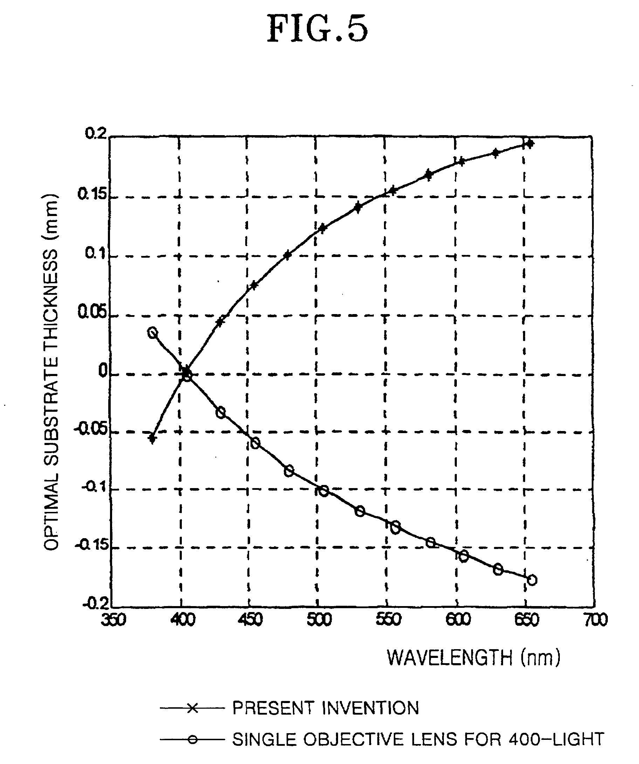

Figure 5 is a graph comparatively showing the change in optimal disk substrate thickness according to the variation of wavelength for a conventional single objective lens and the doublet objective lens according to the present invention, which is designed based on the data of Table 1. For the conventional single objective lens, the optimal thickness of the substrate tends to decrease with an increase in wavelength for correction of chromatic aberration. When a single objective lens for a wavelength of 405 nm and a 0.4mm-thick substrate is employed, chromatic aberration at a wavelength of 650 nm can be eliminated at a substrate thickness of 0.23 mm. Thus, during reading data from a DVD, chromatic aberration corresponding to the thickness variation (0.4-0.23 = 0.17 mm) and spherical aberration corresponding to (0.6-0.4=0.2 mm) occur. For correcting such aberration, the thickness of a HD-DVD must be determined to be 0.6 plus 0.77 mm. However, it goes against a tendency of reducing the thickness of disks for high derisity recording.

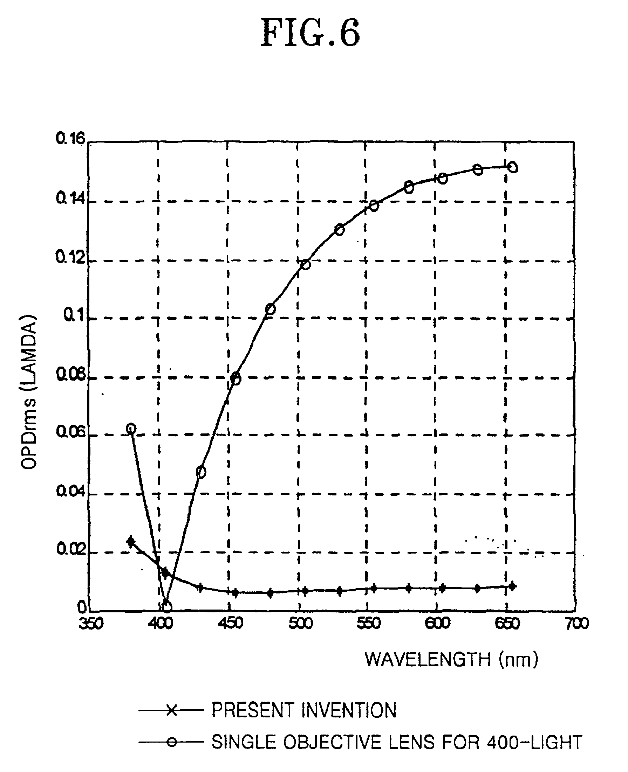

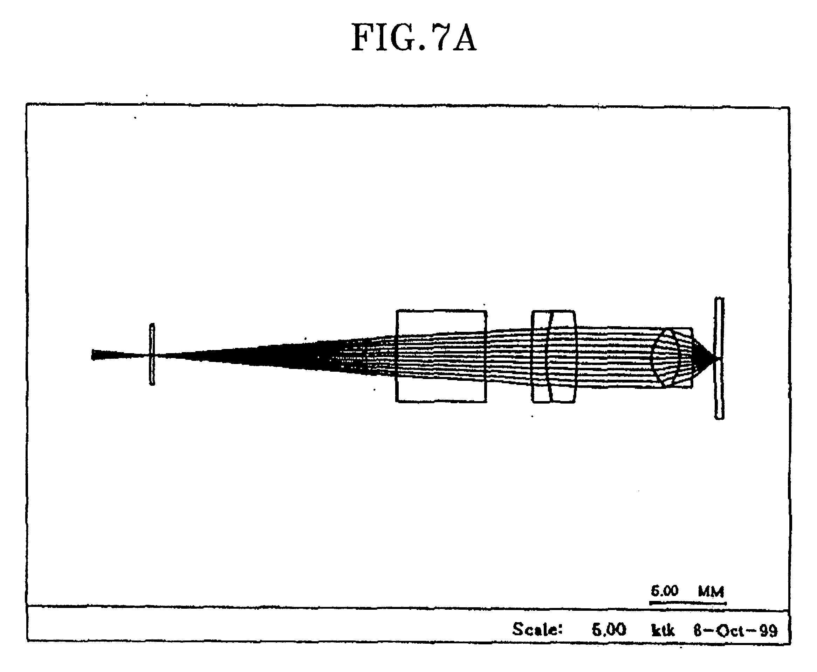

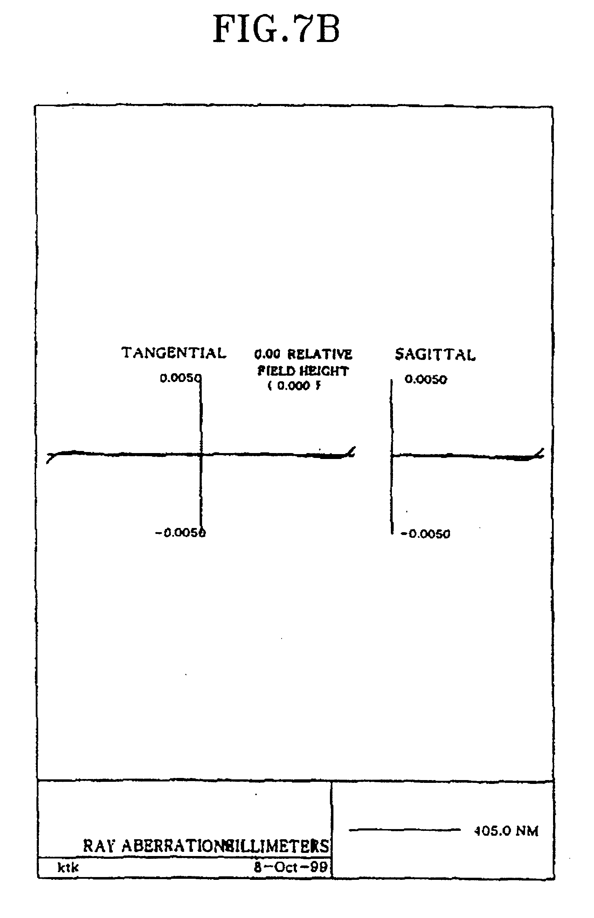

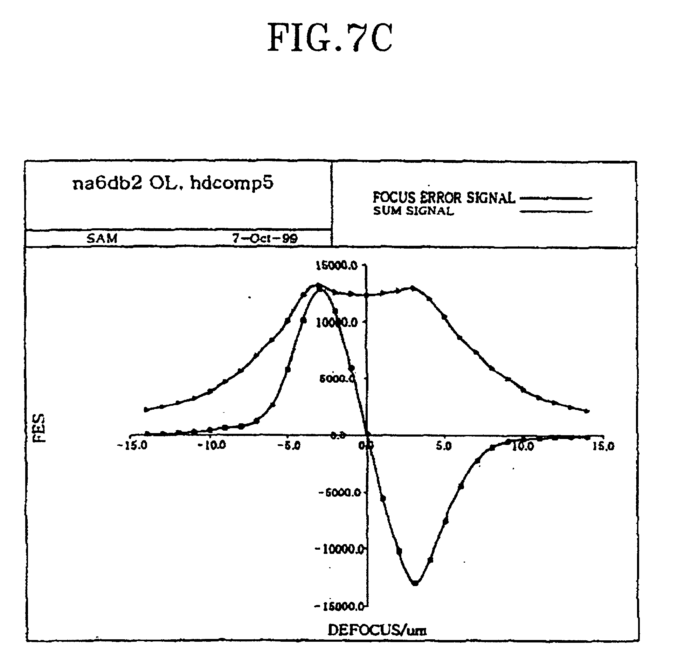

Figure 6 is a graph comparatively showing the change in aberration according to the variation of wavelength for a conventional single objective lens and the doublet objective lens according to the present invention, which is designed for correction of chromatic aberration. Figure 7 indicates that the inventive objective lens can reduce the chromatic aberration by the variation of wavelength to a level of OPD $0.015\lambda_{rms}$ of less.

The degree of defocus on the medium according to wavelength variation for writing and reading operations is inversely proportional to $NA^2$, and the focal depth, $\pm\lambda/2NA^2$, is 0.563μm. For the conventional optical lens, defocus with respect to a wavelength variation of $\pm1$ nm is 0.7 μm, which is beyond the range of the focal depth. Meanwhile, the defocus with respect to a wavelength variation of $\pm1$ nm is 0.45 μm for the inventive doublet optical lens, which is within the range of the focal depth.

Figure 7A illustrates the optical path of the laser beam having a wavelength of 405 nm toward a disk having a 0.4mm-thick substrate in an optical system designed with the specifications in Table 1, Figure 7B shows aberration occurring in the optical system of Figure 7A, and Figure 7C shows a focus error signal obtained by astigmatism in the optical system of Figure 7A.

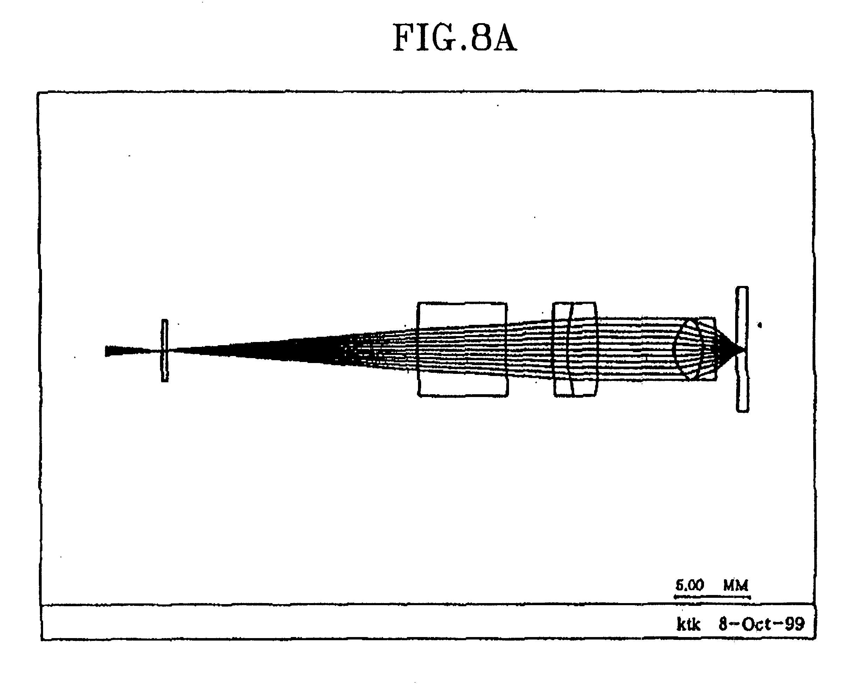

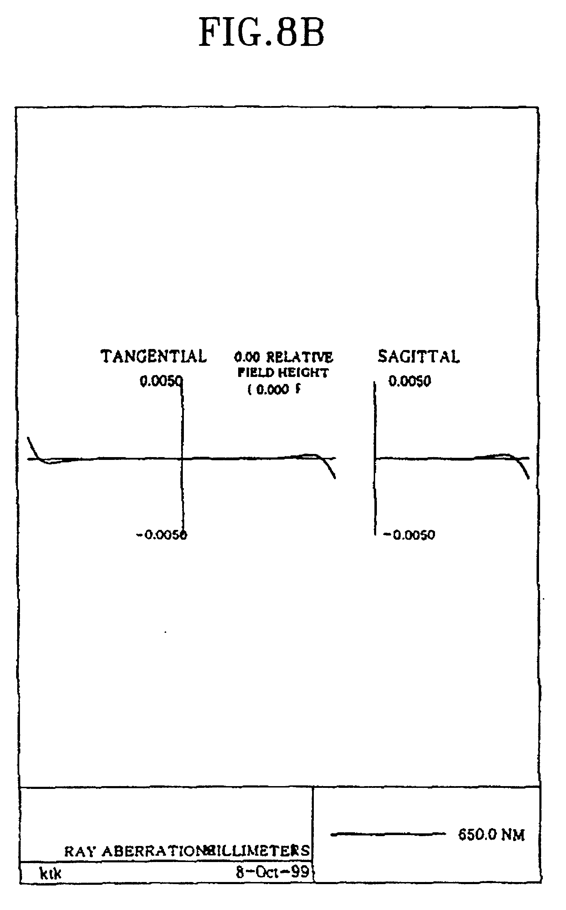

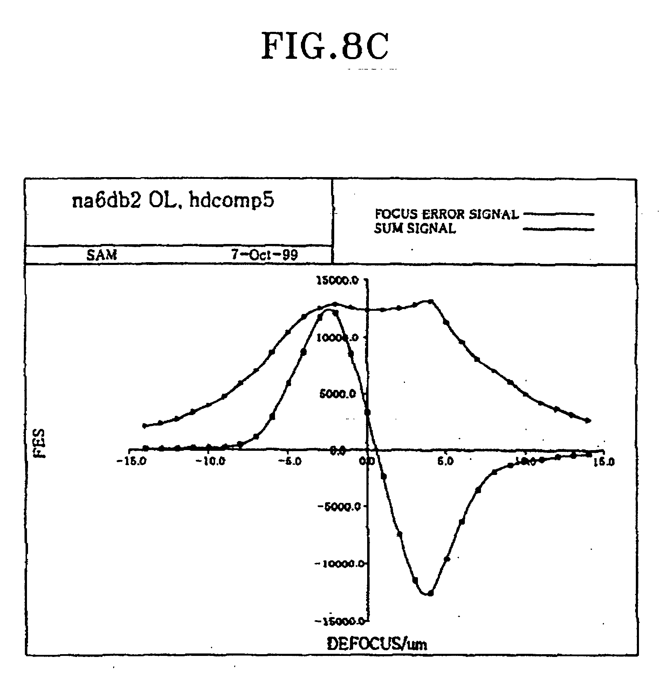

Figure 8A illustrates the optical path of the laser beam having a wavelength of 650 nm toward a disk having a 0.6mm-thick substrate in the optical system designed with the data shown in Table 1, Figure 8B shows aberration occurring in the optical system of Figure 8A, and Figure 8C shows the focus error signal detected by astigmatism in the optical system of Figure 8A. As shown in Figure 8C, an offset of about 0.5 µm or more occurs, which is possibly corrected using appropriate signal processing circuits. This result shows that one photodetector can be used for both types of disks as illustrated in the second embodiment.

Table 2 shows the design data for a conventional doublet collimating lens for light of 650 nm, which has a focal distance of 25 mm. As shown in Table 2, the total-to-negative diverging power ratio of the collimating lens is close to -1. In view of the ratio of the collimating lens according to the present invention, which is shown to be -1.29 in Table 1, the collimating lens according to the present invention has considerably strong diverging power. Meanwhile, the diverging power of the inventive objective lens is relative weak at 0.48.

Table 2

| Surface | Curvature Radius | Thickness | Name of Glass |
|---|---|---|---|
| Object Surface | Infinity | Infinity | |
| s1 | 14.800000 | 1.7 | BAF3 |
| s2 | -13.480000 | 1.3 | SF11 |
| s3 | -48.995000 | 3.5 | |
| s4 | Infinity | 6.000000 | BK7 |
| s5 | Infinity | 16.025691 | |
| s6 | Infinity | 0.000000 | |
| Image Surface | Infinity | 0.000000 | |
| Refractive Index/Abbe's Number on d-line, v | | BAF3 : 1.579229/ 46.5 SF11 : 1.776662/ 25.8 BK7 : 1.514520/ 64.2 | |
| Wavelength (nm) | | 650 | |
| Focal Distance of Collimating Lens at Negative /Positive Portions, fc1 and fc2 (mm) Focal Distance of Combined Collimating Lens, fc (mm) $\sum 1 / (fi \cdot vi)$ fc / fc2 | | 12.454/ -24.333 25.000 0.00013 -1.027 | |

The optical pickup according to the present invention is compatible for both existing DVDs, and HD-DVDs, which employ a blue light source near 405 nm and an objective lens having an NA of 0.6, but the specification thereof is not standardized yet. In particular, the inventive optical pickup can achieve the dual-compatibility by adopting only one objective lens and one photodetector. Also, because the optical pickup according to the present invention has a simple structure, it can be easily manufactured at reduced cost. In addition, defocusing according to wavelength variation during high-density writing and reading operations can be suppressed within the range of focal depth, which enables high quality signal reproduction.

While this invention has been particularly shown and described with reference to preferred embodiments thereof, it will be understood by those skilled in the art that various changes in form and details may be made thereto without departing from the scope of the invention as defined by the appended claims.

**Claims**

1.  An optical pickup comprising:

    first and second light sources (601; 701) for generating laser beams having different wavelengths, corresponding to first and second media (100) having different thicknesses, respectively;

    an objective lens (200) having diverging and condensing portions, for focusing the laser beams from the first and second light sources (601; 701) onto the first and second media, respectively;

    at least one photodetector (602; 702) for receiving the laser beams which are emitted from the first and second light sources (601; 701) and reflected, respectively, by the first and second media; and

    a collimating lens (400) arranged on the optical path between the objective lens (200), and the first and second light sources (601; 701); **characterized in that**:

    assuming that the front focal lengths of the diverging and condensing portions of the objective lens (200) are f1 and f2, respectively, and the Abbe's numbers on the d-line of the optical materials for the diverging and condensing portions of the objective lens are v1 and v2, respectively, the objective lens (200) satisfies the relationship $0 < 1/(f1 \cdot v1) + 1/(f2 \cdot v2) < 0.005$.

2.  The optical pickup of claim 1, wherein assuming that the focal length of the entire objective lens (200) is f and the focal length of the diverging portion is fn, the objective lens (200) satisfies the relationship $-0.8 < f/fn < 0$.

3.  The optical pickup of claim 1, wherein one surface of the objective lens (200) is an aspheric plane.

4.  The optical pickup of claim 1 or claim 2, wherein the photodetector (602; 702) receives the laser beams originating from both the first and second light sources ( 601; 701).

5.  The optical pickup of any of claims 1, 2 or 4, wherein the first light source generates a blue laser beam and the second light source generates a red laser beam.

6.  The optical pickup of claim 5, wherein the first light source (601) generates a laser beam having a wavelength of 405 nm and the second light source (701) generates a laser beam having a wavelength of 650 nm.

7.  An optical pickup system comprising an optical pickup of any of claims 1, 3, 4 or 6, wherein the substrate of the first medium has a thickness less than 0.6 mm and the substrate of the second medium has a thickness of 0.6 mm.


**Patentansprüche**

1.  Optische Abtastvorrichtung, die umfasst:

    eine erste und eine zweite Lichtquelle (601; 701), die Laserstrahlen mit unterschiedlichen Wellenlängen erzeugen, die einem ersten bzw. einem zweiten Medium (100) mit unterschiedlichen Dicken entsprechen;

    eine Objektivlinse (200) mit einem streuenden und einem konzentrierenden Abschnitt, die die Laserstrahlen von der ersten und der zweiten Lichtquelle (601; 701) auf das erste bzw. das zweite Medium fokussieren;

    wenigstens einen Fotodetektor (602; 702), der die Laserstrahlen empfängt, die von der ersten und der zweiten Lichtquelle (601; 701) emittiert und von dem ersten bzw. dem zweiten Medium reflektiert werden; und

    eine Kollimationslinse (400), die auf dem Lichtweg zwischen der Objektivlinse (200) und der ersten sowie der zweiten Lichtquelle (601; 701) angeordnet ist, **dadurch gekennzeichnet, dass**:

    wenn davon ausgegangen wird, dass die Objektbrennweite des streuenden und des konzentrierenden Abschnitts der Objektivlinse (200) f1 bzw. f2 beträgt und die Abbe'sche Zahl auf der d-Linie der optischen Materialien für den streuenden und den konzentrierenden Abschnitt der Objektivlinse v1 bzw. v2 beträgt, die Objektivlinse (200) die Beziehung 0 < 1/(f1·v1) + 1/(f2·v2) < 0,005 erfüllt.

**2.** Optische Abtastvorrichtung nach Anspruch 1, wobei, wenn davon ausgegangen wird, dass die Brennweite der gesamten Objektivlinse (200) f beträgt und die Brennweite des streuenden Abschnitts fn beträgt, die Objektivlinse (200) die Beziehung -0,8 < f/fn < 0 erfüllt.

**3.** Optische Abtastvorrichtung nach Anspruch 1, wobei eine Fläche der Objektivlinse (200) eine asphärische Ebene ist.

**4.** Optische Abtastvorrichtung nach Anspruch 1 oder Anspruch 2, wobei der Fotodetektor (602; 702) die Laserstrahlen empfängt, die sowohl von der ersten als auch von der zweiten Lichtquelle (601; 701) ausgehen.

**5.** Optische Abtastvorrichtung nach einem der Ansprüche 1, 2 oder 4, wobei die erste Lichtquelle einen blauen Laserstrahl erzeugt und die zweite Lichtquelle einen roten Laserstrahl erzeugt.

**6.** Optische Abtastvorrichtung nach Anspruch 5, wobei die erste Lichtquelle (601) einen Laserstrahl mit einer Wellenlänge von 405 nm erzeugt und die zweite Lichtquelle (701) einen Laserstrahl mit einer Wellenlänge von 650 nm erzeugt.

**7.** Optisches Abtastsystem, das eine optische Abtastvorrichtung nach einem der Ansprüche 1, 3, 4 oder 6 umfasst, wobei das Substrat des ersten Mediums eine Dicke von weniger als 0,6 mm hat und das Substrat des zweiten Mediums eine Dicke von 0,6 mm hat.

**Revendications**

**1.** Tête de lecture optique comportant :

des première et seconde sources de lumière (601 ; 701) pour générer des faisceaux laser ayant des longueurs d'onde différentes, correspondant à des premier et second supports (100) ayant des épaisseurs différentes, respectivement,
un objectif (200) ayant des parties divergente et condensatrice, pour focaliser les faisceaux laser provenant des première et seconde sources de lumière (601 ; 701) sur les premier et second supports, respectivement,
au moins un photodétecteur (602 ; 702) pour recevoir les faisceaux laser qui sont émis par les première et seconde sources de lumière (601 ; 701) et réfléchis, respectivement, par les premier et second supports, et
une lentille collimatrice (400) agencée sur le trajet optique entre l'objectif (200) et les première et seconde sources de lumière (601 ; 701), **caractérisée en ce que** :

en supposant que les longueurs focales avant des parties divergente et condensatrice de l'objectif (200) sont f1 et f2, respectivement, et que les nombres de Abbe sur la ligne d des matériaux optiques pour les parties divergente et condensatrice de l'objectif sont v1 et v2, respectivement, l'objectif (200) satisfait à la relation 0 < 1/(f1.v1) + 1/(f2.v2) < 0,005.

**2.** Tête de lecture optique selon la revendication 1, dans laquelle, en supposant que la longueur focale de tout l'objectif (200) est égale à f et la longueur focale de la partie divergente est égale à fn, l'objectif (200) satisfait à la relation -0,8 < f/fn < 0.

**3.** Tête de lecture optique selon la revendication 1, dans laquelle une surface de l'objectif (200) est un plan asphérique.

**4.** Tête de lecture optique selon la revendication 1 ou la revendication 2, dans laquelle le photodétecteur (602 ; 702) reçoit les faisceaux laser émanant à la fois des première et seconde sources de lumière (601 ; 701).

**5.** Tête de lecture optique selon l'une quelconque des revendications 1, 2 ou 4, dans laquelle la première source de lumière génère un faisceau laser bleu et la seconde source de lumière génère un faisceau laser rouge.

**6.** Tête de lecture optique selon la revendication 5, dans laquelle la première source de lumière (601) génère un faisceau laser ayant une longueur d'onde de 405 nm et la seconde source de lumière (701) génère un faisceau laser ayant une longueur d'onde de 650 nm.

**7.** Système à tête de lecture optique comportant une tête de lecture optique selon l'une quelconque des revendications 1, 3, 4 ou 6, dans lequel le substrat du premier support a une épaisseur inférieure à 0,6 mm et le substrat du second support a une épaisseur de 0,6 mm.

# FIG.1 (PRIOR ART)

# FIG.2 (PRIOR ART)

# FIG.3

# FIG.4

# FIG.5

PRESENT INVENTION

SINGLE OBJECTIVE LENS FOR 400-LIGHT

# FIG.6

FIG.7A

Scale:   5.00     5.00   MM
             kik  8-Oct-99

# FIG.7B

TANGENTIAL    0.00 RELATIVE    SAGITTAL

FIELD HEIGHT

( 0.000 )

0.0050                    0.0050

-0.0050                -0.0050

RAY ABERRATIONS MILLIMETERS

ktk          8-Oct-99

————————— 405.0 NM

18

# FIG.7C

# FIG.8A

5.00  MM

ktk  8-Oct-99

EP 1 117 096 B1

# FIG.8B

TANGENTIAL   0.00 RELATIVE   SAGITTAL
FIELD HEIGHT
0.0050   ( 0.000 )   0.0050

-0.0050   -0.0050

RAY ABERRATION MILLIMETERS

ktk   8-Oct-99

650.0 NM

# FIG.8C